# FASCICULE DE BREVET EUROPEEN

(11) **EP 4 375 151 B1**
(45) Date de publication et mention de la délivrance du brevet: **22.04.2026**
(21) Numéro de dépôt: 23211311.8
(22) Date de dépôt: 21.11.2023
(51) Int. Cl.: B60T 17/22

(54) **PROCÉDÉ DE DÉTERMINATION D'UN ÉTAT D'USURE D'UNE GARNITURE D'UNE PLAQUETTE DE FREIN D'UN FREIN À DISQUE POUR VÉHICULE**
VERFAHREN ZUR ERMITTLUNG EINES VERSCHLEISSZUSTANDES EINES BREMSBELAGS EINER BREMSSCHEIBE FÜR EIN FAHRZEUG
METHOD FOR DETERMINING A WEAR STATE OF A BRAKE LINING OF A BRAKE PAD OF A DISC BRAKE FOR A VEHICLE

(30) Priorité: 25.11.2022 FR 2212367
(43) Date de publication de la demande: 29.05.2024
(73) Titulaire: Astemo France, 93700 Drancy (FR)
(72) Inventeur: RAMDANE, Abdessamed, 60000 BEAUVAIS (FR); BOURLON, Philippe, 77230 DAMMARTIN EN GOËLE (FR); AUGUSTE, Antony, 94350 VILLIERS SUR MARNE (FR)
(74) Mandataire: LLR

(56) Documents cités:
- CN-U- 216 102 063
- US-A- 5 975 250
- US-A- 6 082 835
- US-A1- 2019 225 198

## Description

### Domaine technique de l'invention

L'invention se rapporte à un procédé de détermination d'un état d'usure de la garniture d'une plaquette de frein d'un frein à disque pour un véhicule. L'invention se rapporte aussi à un procédé de gestion de la fiabilité d'un freinage d'un frein à disque. Enfin, l'invention se rapporte également à un véhicule comprenant des moyens de mise en oeuvre de ces procédés.

### Arrière-plan technique

Il a été proposé des freins à disque pour véhicule, par exemple pour véhicule automobile, comprenant un actionneur, par exemple un actionneur électrique tel qu'un moteur électrique, destiné à fournir une force de serrage à un organe de serrage, par exemple un piston, afin de déplacer des plaquettes de frein portant des garnitures de freinage en direction du disque de manière à ce que les garnitures des plaquettes de frein viennent enserrer le disque pour réaliser le freinage. Les frottements entre le disque et les garnitures de freinage entrainent notamment l'usure de ces dernières et donc la diminution de leurs épaisseurs au fur et à mesure des freinages. Inévitablement, l'épaisseur des garnitures de frein finit par être réduite. Il est alors nécessaire de remplacer les plaquettes de frein pour assurer la sécurité du véhicule.

L'état d'usure avancé des garnitures des plaquettes de frein peut être détecté lorsque l'utilisateur ressent une baisse d'efficacité du freinage ou lors d'un contrôle par un garagiste. Mais on comprend que l'état d'usure avancé des garnitures des plaquettes de frein, faute d'un dépistage en temps utile, augmente le risque d'accident en diminuant la sécurité d'utilisation du véhicule.

Pour remédier à cet inconvénient, il est connu d'utiliser un détecteur d'usure des plaquettes. Toutefois, l'utilisation d'un détecteur n'est pas totalement satisfaisante. Tout d'abord, il ne permet de détecter qu'une usure avancée des garnitures des plaquettes de frein et ne permet donc pas de connaitre un état d'usure intermédiaire, qui permettrait d'effectuer un remplacement des plaquettes de frein avant que celles-ci ne soient plus suffisamment efficaces. De plus, l'utilisation d'un détecteur d'usure représente un coût supplémentaire non négligeable lors de la fabrication du frein.

On connaît également, du document CN216102063U, un système de surveillance d'un état d'usure d'une garniture d'une plaquette de frein d'un frein à disque pour un véhicule comprenant un moteur électrique pour fournir une force de serrage à un organe de serrage afin de déplacer la plaquette de frein en direction du disque de manière à ce que la garniture vienne en contact avec le disque. Dans ce système de surveillance, pour déterminer un état d'usure de la garniture, on détermine une longueur de course de l'organe de serrage depuis une position de référence jusqu'à une position de freinage, dans laquelle la garniture de la plaquette de frein est en contact avec le disque. Ce système de détermination de l'état d'usure est plus économique.

### Résumé de l'invention

L'invention a notamment pour but de permettre de déterminer de manière simple et économique l'état d'usure d'une garniture d'une plaquette de frein d'un frein à disque, en permettant notamment une détection précoce d'une usure et des états d'usure intermédiaires.

À cet effet, l'invention a pour objet un procédé de détermination d'un état d'usure d'une garniture d'une plaquette de frein d'un frein à disque pour véhicule, le frein à disque comprenant un moteur électrique destiné à fournir une force de serrage à un organe de serrage afin de déplacer la plaquette de frein en direction du disque de manière à ce que la garniture de la plaquette de frein vienne en contact avec le disque, procédé caractérisé en ce que :
a) on détermine une longueur de la course de l'organe de serrage depuis une position de référence, à l'écart de la plaquette de frein, jusqu'à une position de contact, correspondant à la position de l'organe de serrage au moment où il entre en contact avec la plaquette de frein,
b) on déduit un état d'usure de la garniture de la plaquette de frein en déterminant la différence entre la longueur de la course de l'organe de serrage et une longueur de référence.

Au fur et à mesure des freinages, la garniture de la plaquette de frein s'use et son épaisseur diminue. À l'issue d'un freinage, l'organe de serrage est déplacé activement par le moteur électrique à l'écart de la plaquette de frein. La plaquette de frein n'est, généralement pas déplacée activement dans sa position de départ, à l'écart du disque. Dans ce cas, c'est notamment le voile du disque qui permet de repousser la plaquette de frein à l'écart du disque. Ainsi, au cours de la vie de la plaquette de frein, l'écart entre sa garniture et le disque (aussi appelé « air gap » en anglais) reste sensiblement le même en dehors d'une période de freinage. En conséquence, plus la garniture de la plaquette de frein est usée, plus son épaisseur est réduite, et plus la face de la plaquette en regard de l'organe de serrage, qui est opposée à la face de la plaquette portant la garniture, est éloignée de l'organe de serrage en dehors d'une période de freinage. Ainsi, la longueur de la course de l'organe de serrage depuis sa position de référence jusqu'à sa position de contact avec la plaquette de frein augmente avec l'usure de la garniture. La longueur de la course de l'organe de serrage entre sa position de référence et sa position de contact est directement proportionnelle à l'état d'usure de la garniture de la plaquette de frein. Par exemple, si l'épaisseur de la garniture de la plaquette de frein diminue d'un millimètre, l'écart entre la face de la plaquette de frein en regard de l'organe de serrage et l'organe de serrage augmente d'un millimètre car l'écart entre le disque et la garniture reste sensiblement constant. Ainsi, le procédé permet avantageusement de déterminer de manière simple et fiable l'état d'usure de la garniture de la plaquette de frein. Le procédé selon l'invention permet de détecter l'usure de la garniture de la plaquette de frein avant que celle-ci n'atteigne un niveau susceptible de diminuer l'efficacité de freinage de la plaquette de frein. La sécurité du frein à disque et le suivi de l'état d'usure de la garniture de la plaquette de frein sont donc améliorés.

On comprend que le procédé est économique puisqu'il ne nécessite pas d'utiliser un capteur spécifique, tel qu'un détecteur d'usure, pour connaitre l'état d'usure de la garniture de la plaquette de frein. Il est uniquement nécessaire de connaitre la position de l'organe de serrage, cette position pouvant être mesurée ou estimée de manière simple, en utilisant des données fournies par des capteurs déjà présents sur le frein à disque. Par exemple, la position de l'organe de serrage peut être obtenue de manière simple et fiable grâce à un détecteur de position du moteur électrique destiné à déterminer une position angulaire du moteur électrique.

La position de contact correspond à la position de l'organe de serrage lorsqu'il entre en contact avec la plaquette de frein lors d'un freinage. L'organe de serrage est en contact avec la plaquette de frein pendant toute la durée de freinage mais la position de contact concerne uniquement le moment où l'organe de serrage entre en contact avec la plaquette de frein. Ainsi ce procédé ne requiert pas que la garniture soit mise en contact avec le disque, ce qui permet de déterminer l'état d'usure plus rapidement, avec une consommation plus faible d'énergie. On réduit également l'usure du mécanisme de frein. De plus, la mesure de l'état d'usure est plus fiable car la compression de la garniture dépend de l'épaisseur restante.

La position de référence correspond à une position déterminée de l'organe de serrage, permettant la comparaison entre la longueur de la course de l'organe de serrage déterminée à l'étape a) et la longueur de référence.

La différence entre la longueur de la course de l'organe de serrage et la longueur de référence est, par exemple, calculée par des moyens de calcul d'une unité de commande électronique du frein à disque ou du véhicule.

L'invention peut comporter l'une ou plusieurs des caractéristiques optionnelles suivantes, prises seules ou en combinaison.

Avantageusement, on déduit qu'un remplacement de la plaquette de frein est nécessaire lorsque la différence déterminée à l'étape b) est supérieure à un seuil prédéterminé. Le seuil prédéterminé est par exemple choisi de manière à correspondre à un niveau d'usure proche d'un niveau d'usure susceptible d'affecter l'efficacité de freinage. Ainsi, on déduit qu'un remplacement de la plaquette de frein est nécessaire avant qu'un niveau d'usure de la plaquette de frein susceptible d'affecter l'efficacité du freinage ne soit atteint. On comprend que le seuil prédéterminé varie en fonction de plusieurs paramètres, par exemple en fonction du type et du poids de véhicule sur lequel le frein à disque est monté ou encore de la nature de la garniture de la plaquette de frein.

De préférence, le seuil prédéterminé est déterminé de manière à correspondre au seuil à partir duquel la garniture de la plaquette de frein présente une épaisseur résiduelle inférieure à 2 mm. Il s'agit généralement d'une épaisseur limite en-dessous de laquelle l'efficacité du freinage est affectée.

Avantageusement, le seuil prédéterminé est compris entre 8 et 10 mm. Il s'agit généralement d'un niveau d'usure au-delà duquel l'efficacité de freinage est affectée, notamment car une garniture d'une plaquette de frein présente généralement une épaisseur comprise entre 10 et 12 mm.

De préférence, au cours de l'étape a), afin de déterminer la longueur de la course de l'organe de serrage, on détermine la force de serrage fournie par le moteur électrique en fonction de la position de l'organe de serrage. La relation entre la force de serrage fournie par le moteur électrique et la position de l'organe de serrage est un moyen simple et efficace de déterminer la longueur de la course de l'organe de serrage. En effet, une courbe représentant la force de serrage en fonction de la position de l'organe de serrage présente un profil caractéristique. Ce profil comprend une première phase correspondant au déplacement du piston depuis sa position de référence et vers la position de contact avec la plaquette de frein. Au cours de cette première phase, la force de serrage fournie par le moteur électrique est constante. Au moment où l'organe de serrage entre en contact avec la plaquette de frein, on observe un pic sur cette courbe qui correspond à l'augmentation de la force de serrage nécessaire pour surpasser les forces de frottement de la plaquette de frein et mettre cette dernière en mouvement. Ainsi, la course de l'organe de serrage entre sa position de référence et l'apparition de ce pic sur la courbe correspond à la course de l'organe de serrage depuis sa position de référence et jusqu'à sa position de contact avec la plaquette de frein.

Selon un mode de réalisation, la force de serrage fournie par le moteur électrique est déterminée à partir de l'intensité et la tension du courant d'alimentation électrique du moteur électrique. Il s'agit d'un moyen simple et efficace de déterminer la force de serrage sans avoir recours à un capteur de force. Selon d'autres modes de réalisation, la force de serrage est mesurée par un capteur de force.

Avantageusement, la longueur de référence correspond à la longueur de la course de l'organe de serrage depuis la position de référence jusqu'à la position de contact lorsque la plaquette de frein est neuve, le procédé comprenant de préférence, préalablement à l'étape a), une étape de détermination de la longueur de référence. Ainsi, on obtient une différence entre la longueur de la course de l'organe de serrage et la longueur de référence qui est la plus proche possible de l'usure réelle de la garniture de la plaquette de frein.

Avantageusement, préalablement à l'étape a), on commande un déplacement de l'organe de serrage en position de référence dans laquelle l'organe de serrage est en butée contre un corps d'étrier du frein à disque. On améliore ainsi la fiabilité du procédé en assurant sa reproductibilité puisque la position de référence est ainsi simple à obtenir et identique entre toutes les mises en œuvre du procédé.

Selon un mode de réalisation, on commande une réduction de la tension d'alimentation électrique du moteur électrique lors de la mise en œuvre de l'étape a) et/ou de l'étape préalable à l'étape a) dans laquelle on commande un déplacement de l'organe de serrage en position de référence, de préférence la tension d'alimentation électrique du moteur électrique étant diminuée de manière à être comprise entre 7 et 8 V. La diminution de la tension d'alimentation électrique entraine une diminution de la vitesse du moteur électrique et donc une diminution de la vitesse de déplacement de l'organe de serrage, que ce soit pour réaliser sa course entre sa position de référence et sa position de contact, ou sa course jusqu'en position de référence. On comprend que l'utilisation d'une vitesse réduite permet d'améliorer la fiabilité du procédé puisque, par exemple, la position de l'organe de serrage est déterminée de manière plus précise. On comprend également que l'utilisation d'une vitesse réduite diminue le risque d'endommager un élément du frein à disque tel que le corps d'étrier lorsque l'organe de serrage est déplacé en position de référence, ou l'organe de serrage lui-même.

Selon un mode de réalisation, le procédé comprend en outre une étape de détermination d'un état d'usure de la garniture de la plaquette de frein en fonction du profil d'une courbe représentant la force de serrage fournie par le moteur électrique en fonction de la position de l'organe de serrage. En effet, une telle courbe donne des indications permettant de conclure rapidement et de manière simple sur un état d'usure de la garniture de la plaquette de frein. Notamment, au moment où deux plaquettes de frein enserrent le disque pour réaliser le freinage, les garnitures de ces plaquettes de frein absorbent une partie de la force de serrage en étant comprimées de sorte que, durant une courte période, la force de serrage fournie par le moteur électrique n'est pas proportionnelle au déplacement du piston. Toutefois, plus la garniture de la plaquette de frein est usée, et donc moins elle est épaisse, moins il y a d'absorption de la force de serrage par celle-ci au début du freinage. Lorsque les garnitures des deux plaquettes de frein présentent une usure importante, on observe même une disparition de cette phase d'absorption de la force de serrage par les garnitures de freinage pour observer directement une phase lors de laquelle la force de serrage est proportionnelle au déplacement de l'organe de serrage. Ainsi, l'analyse de la courbe, et notamment du début de la phase de freinage, permet de déduire un état d'usure de la garniture de la plaquette. Cela est par ailleurs avantageux puisque le profil de la courbe est dans certains cas suffisamment explicite pour déterminer s'il est nécessaire ou non de mettre en œuvre le procédé selon l'invention. Il est ainsi possible de réduire le nombre de fois où le procédé est mis en œuvre, ce qui est économique.

L'invention a également pour objet un procédé de gestion de la fiabilité d'un freinage de véhicule, caractérisé en ce qu'on déclenche le procédé de détermination d'un état d'usure d'une garniture d'une plaquette de frein d'un frein à disque pour véhicule tel que décrit précédemment lorsque le véhicule comprenant le frein à disque est à l'arrêt. Le procédé de détermination d'un état d'usure d'une garniture d'une plaquette de frein d'un frein à disque pour véhicule tel que décrit précédemment est susceptible de provoquer un freinage. Ainsi, le fait que le procédé de gestion de la fiabilité du freinage ne mette en œuvre ce procédé que lorsque le véhicule est à l'arrêt permet de réduire le risque qu'un freinage non désiré ait lieu pendant l'utilisation du véhicule.

Avantageusement, on déclenche une mise en œuvre du procédé de détermination d'un état d'usure d'une garniture d'une plaquette de frein d'un frein à disque pour véhicule tel que décrit précédemment de manière automatique à chaque fois que le véhicule comprenant le frein à disque a parcouru une distance prédéterminée depuis la dernière mise en œuvre du procédé ou depuis la première utilisation du véhicule. On comprend que l'usure de la plaquette de frein est corrélée à la distance parcourue par le véhicule. Ainsi, plus la voiture parcourt de kilomètre plus le risque que la garniture de la plaquette de frein présente une usure importante augmente. Ainsi, en mettant en œuvre le procédé à intervalles réguliers en fonction de la distance parcourue par celui-ci on réduit le risque que la garniture de la plaquette de frein atteigne un niveau d'usure susceptible d'affecter l'efficacité du freinage. On comprend que la distance prédéterminée varie en fonction de plusieurs paramètres tels que le type de véhicule, son poids, ou encore le type de garniture de plaquette de frein utilisé. La distance prédéterminée est choisie de manière à être suffisamment basse pour éviter le risque de ne pas détecter un niveau d'usure de la garniture de la plaquette de frein nécessitant son remplacement, et suffisamment élevée pour ne pas mettre en œuvre le procédé inutilement lorsque cela n'est pas nécessaire. Selon un mode de réalisation, la distance prédéterminée est comprise entre 5 000 et 15 000 km, de préférence la distance prédéterminée est de 10 000 km.

Avantageusement, on déclenche une mise en œuvre du procédé de détermination d'un état d'usure d'une garniture d'une plaquette de frein d'un frein à disque pour véhicule tel que décrit précédemment de manière automatique à chaque fois qu'un nombre d'actionnement prédéterminé du frein à disque est atteint depuis la dernière mise en œuvre du procédé ou depuis la première utilisation du véhicule. On comprend que l'usure de la plaquette de frein est corrélée au nombre d'actionnement du frein à disque. À chaque actionnement du frein, la garniture de la plaquette de frein frotte contre le disque de sorte que son épaisseur diminue. Ainsi, plus le frein à disque est actionné, plus le risque que la garniture de la plaquette de frein présente une usure importante susceptible d'affecter l'efficacité du freinage augmente. Ainsi, en mettant en oeuvre le procédé à intervalles réguliers en fonction du nombre d'actionnement du frein à disque, on réduit le risque que la garniture de la plaquette de frein atteigne un niveau d'usure susceptible d'affecter l'efficacité du freinage sans en être alerté. On comprend que le nombre d'actionnement prédéterminée du frein à disque varie en fonction de plusieurs paramètres tels que le type de véhicule, son poids, ou encore le type de garniture de plaquette de frein utilisé. Le nombre d'actionnement prédéterminée du frein à disque est choisi de manière à être suffisamment bas pour éviter le risque de ne pas détecter un niveau d'usure de la garniture de la plaquette de frein nécessitant son remplacement, et suffisamment élevé pour ne pas mettre en oeuvre le procédé inutilement lorsque cela n'est pas nécessaire.

L'invention a également pour objet un véhicule comprenant au moins un frein à disque et une unité de commande électronique, l'unité de commande électronique étant destinée à commander la mise en oeuvre du procédé de détermination d'un état d'usure d'une garniture d'une plaquette de frein du frein à disque et/ou du procédé de gestion de la fiabilité d'un freinage du véhicule.

Avantageusement, le véhicule comprend au moins deux freins à disque, l'unité de commande électronique étant apte à déterminer de manière distinctive l'état d'usure de la garniture de la plaquette de frein de chaque frein à disque. Il est ainsi possible de déterminer distinctement l'état d'usure des plaquettes des différents freins à disque. Un opérateur intervenant sur le véhicule ou un utilisateur de celui-ci peut donc être averti lorsqu'une plaquette de frein d'un des freins à disque du véhicule présente une usure nécessitant son remplacement et être informé du frein concerné. Ainsi, il est possible de remplacer uniquement les plaquettes de frein qui nécessitent un remplacement.

### Brève description des figures

L'invention sera mieux comprise à la lecture de la description qui va suivre donnée uniquement à titre d'exemple non limitatif et faite en se référant aux dessins annexés dans lesquels :
[Fig. 1] est une vue de dessus d'un véhicule selon l'invention ;
[Fig. 2] est une vue en perspective d'un frein à disque monté sur le véhicule de la figure 1 ;
[Fig. 3] est une représentation schématique de l'organe de serrage, des plaquettes de frein et du disque du frein à disque de la figure 2 à différents états d'usure des plaquettes de frein ; et
[Fig. 4] est un graphique représentant une force de serrage fournie par le moteur électrique en fonction de la position de l'organe de serrage.

### Description détaillée

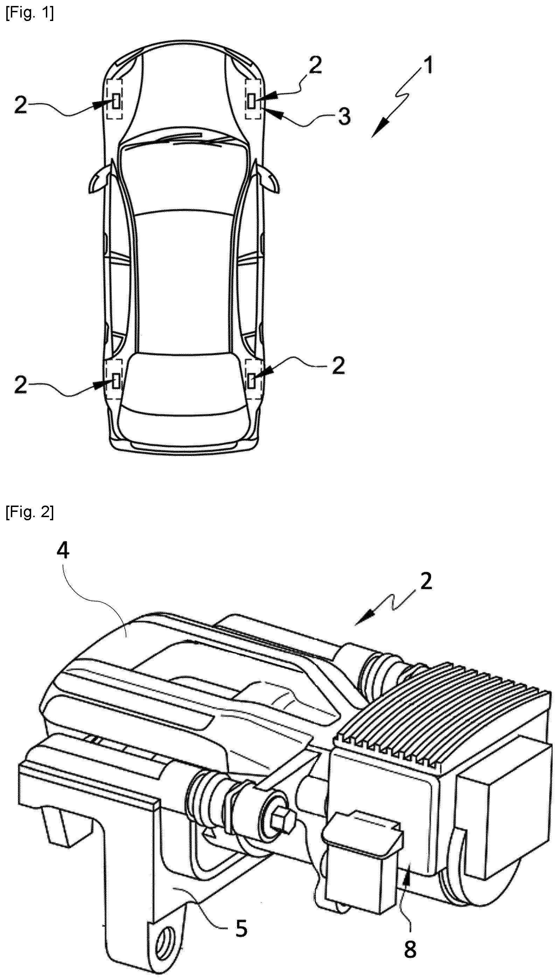

La figure 1 représente un véhicule, ici un véhicule 1 automobile, selon l'invention, comprenant au moins deux freins 2 à disque, ici au nombre de quatre, chaque roue 3 du véhicule 1 automobile étant équipée d'un frein.

L'invention s'applique à tout type de frein, notamment ceux destinés à équiper des véhicules à moteur de type tourisme, SUV (acronyme anglais pour « Sport Utility Vehicles »), deux roues (notamment motos), avions, véhicules industriels choisis parmi les camionnettes, les « Poids - lourds » - c'est-à-dire les métros, bus, engins de transport routier (camions, tracteurs, remorques), les véhicules hors-la-route tels que les engins agricoles ou de génie civil -, ou autres véhicules de transport ou de manutention. L'invention s'applique également aux véhicules non motorisés comme notamment une remorque, une semi-remorque ou une caravane.

La figure 2 représente le frein 2 qui est, dans le cas présent, du type à disque à étrier flottant. Ainsi, il comprend de manière classique un étrier 4 monté coulissant par rapport à une chape 5 fixe par rapport véhicule 1 automobile. Le frein 2 à disque comprend en outre au moins deux plaquettes 6 de frein destinées à coopérer par friction respectivement avec des faces opposées d'un disque 7 solidaire en rotation d'une des roues 3 du véhicule 1 automobile afin de réaliser le freinage. Selon d'autres modes de réalisation, le frein 2 est d'un type différent, tel qu'un frein à disque à étrier fixe.

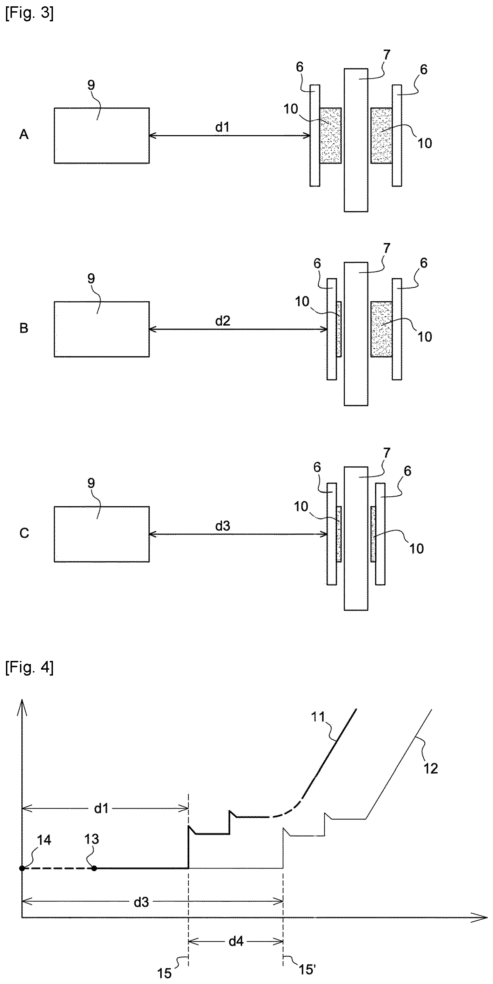

Le frein 2 à disque comprend un moteur 8 électrique destiné à fournir une force de serrage à un organe 9 de serrage, formé ici par un piston, afin de déplacer les plaquettes 6 de frein en direction du disque 7 de manière à ce que les garnitures 10 des plaquettes 6 de frein viennent en contact avec le disque 7 et l'enserrent pour réaliser le freinage. Dans le cas présent, l'organe 9 de serrage n'est pas solidaire des plaquettes 6 de frein, et notamment pas solidaire de la plaquette 6 de frein interne (représentée à gauche sur les figures 3A à 3C). Ainsi, de manière classique, dans un premier temps du freinage, l'organe 9 de serrage est déplacé par le moteur 8 électrique depuis une position d'utilisation, à distance de la plaquette 6 de frein interne, jusqu'en position de contact avec la plaquette 6 de frein interne. L'organe 9 de serrage déplace ensuite la plaquette 6 de frein jusqu'à ce que sa garniture 10 entre en contact avec le disque 7. Le moteur 8 électrique continue à fournir une force de serrage de sorte que l'étrier 4 coulisse par rapport à la chape 5 de manière à rapprocher la plaquette 6 de frein externe (représentée à droite sur les figures 3A à 3C) du disque 7. Enfin, la plaquette 6 de frein externe entre en contact avec le disque 7 de sorte que les plaquettes 6 de frein interne et externe enserrent le disque 7 pour réaliser le freinage.

La figure 3 est une représentation schématique de l'organe 9 de serrage, des plaquettes 6 de frein et du disque 7 du frein 2 à disque tel que décrit précédemment, à différents états d'usure des plaquettes de frein. Sur cette figure, l'organe 9 de serrage est représenté en position de référence 14, correspondant dans le cas présent à la position dans laquelle l'organe 9 de serrage est en butée contre le corps de l'étrier 4. Il s'agit de la position de l'organe 9 de serrage la plus éloignée possible de la plaquette 6 de frein interne et du disque 7. Ici, la position de référence 14 diffère de la position d'utilisation 13 qui correspond à la position occupée par l'organe 9 de serrage en dehors d'une période de freinage. En position d'utilisation 13, l'organe 9 de serrage est plus proche de la plaquette 6 de frein interne et du disque 7 qu'en position de référence 14.

La figure 3A représente les plaquettes 6 de frein dans un état neuf ou presque neuf. Les garnitures 10 des plaquettes 6 de frein présentent alors leurs épaisseurs maximales. La longueur de la course d1 de l'organe 9 de serrage, depuis la position de référence 14 et jusqu'à une position de contact 15, correspondant à la position de l'organe 9 de serrage au moment où il entre en contact avec la plaquette 6 de frein interne, est en conséquence la plus petite possible.

La figure 3B représente les plaquettes 6 de frein qui ont été utilisées et qui sont par conséquent partiellement usées. On remarque notamment que la garniture 10 de la plaquette 6 de frein interne est particulièrement usée, de sorte que son épaisseur a grandement diminuée. L'écart entre la garniture 10 de la plaquette 6 de frein et le disque 7 (aussi appelé « air gap » en anglais) étant sensiblement constant au cours de la vie du frein 2 à disque, quel que soit l'état d'usure de la garniture 10, la réduction de l'épaisseur de la garniture 10 entraine ainsi une augmentation de la longueur de la course d2 de l'organe 9 de serrage depuis la position de référence 14 vers la position de contact 15. On remarque que l'augmentation de la longueur de la course d2 de l'organe 9 de serrage est égale ou sensiblement égale à la diminution de l'épaisseur de la garniture 10 de la plaquette 6 de frein interne. Ainsi, la variation de la longueur de la course d2 de l'organe 9 de serrage est un indicateur fiable de l'usure de la garniture 10 de la plaquette 6 de frein.

La figure 3C représente les plaquettes 6 de frein à un niveau d'usure supérieur à celui de la figure 3, notamment en ce qui concerne l'usure de la plaquette 6 de frein externe, dont l'épaisseur de la garniture a fortement diminuée par rapport à la figure 3B. La longueur de la course d3 de l'organe 9 de serrage depuis la position de référence 14 et jusqu'à la position de contact 15 a légèrement augmentée par rapport à la figure 3B.

La figure 4 est un graphique représentant une force de serrage fournie par le moteur 8 électrique en fonction de la position de l'organe 9 de serrage. La force de serrage fournie par le moteur est facilement déterminée, par exemple en utilisant l'intensité et la tension du courant d'alimentation du moteur 8 électrique. Cela est d'autant plus aisé que le moteur 8 électrique est du type sans balais, aussi appelé « moteur brushless ». Alternativement, la force de serrage est mesurée par un capteur de force. La position de l'organe 9 de serrage est déterminée grâce à un capteur de position du moteur 8 électrique. En effet, la position angulaire du moteur 8 électrique et notamment le nombre de tours effectués, permettent de déduire directement et de manière simple la position de l'organe 9 de serrage. Ainsi, on remarque que les paramètres utilisés pour la réalisation du graphique ne nécessitent pas l'utilisation de capteurs supplémentaires par rapport à ceux qui sont déjà nécessairement présents pour assurer le bon fonctionnement du frein 2 à disque, ce qui est économique.

Deux courbes sont représentées sur la figure 4. Une première courbe 11 correspond à la force de serrage fournie par le moteur 8 électrique en fonction de la position de l'organe 9 de serrage lorsque les plaquettes 6 de frein interne et externe sont neuves ou pratiquement neuves (voir figure 3A et 4). Une deuxième courbe 12 correspond à la force de serrage fournie par le moteur 8 électrique en fonction de la position de l'organe 9 de serrage lorsque les plaquettes 6 de frein interne et externe sont particulièrement usées, tel que cela est représenté à la figure 3C.

Comme indiqué précédemment, on remarque sur le graphique que la longueur de la course d1 de l'organe 9 de serrage depuis la position de référence 14 et jusqu'à la position de contact 15 est inférieure à la longueur de la course d3 de l'organe 9 de serrage depuis la position de référence 14 et jusqu'à la position de contact 15'. Comme indiqué précédemment, la différence d4 entre la course d3 et la course d1 est égale ou sensiblement égale au niveau d'usure de la garniture 10 de la plaquette 6 de frein interne. La différence d4 représente la longueur de la course supplémentaire que doit effectuer l'organe 9 pour compenser l'usure de la garniture 10 de la plaquette 6 de frein.

Le profil des deux courbes 11, 12 est sensiblement identique, au décalage dû à la différence d4 près. Il comprend une première phase de déplacement de l'organe 9 de serrage sans augmentation de la force de serrage fournie par le moteur 8 électrique. Lors de cette phase, le moteur 8 électrique fournie la force nécessaire pour déplacer l'organe 9 de serrage depuis la position de référence 14 ou la position d'utilisation 13 et jusqu'à la position de contact 15, 15'. On observe ensuite un pic sur les deux courbes 11, 12 correspondant au moment où l'organe 9 de serrage entre en contact avec la plaquette 6 de frein interne. Cette augmentation de la force de serrage permet de surmonter les forces de frottement de la plaquette 6 de frein interne afin de la mettre en mouvement. Vient ensuite une phase où la force de serrage reste constante, correspondant au moment où l'organe 9 de serrage déplace la plaquette 6 de frein interne en direction du disque 7. On observe ensuite un deuxième pic qui correspond au moment où la garniture 10 de la plaquette 6 de frein interne entre en contact avec le disque 7. La force de serrage fournie par le moteur 8 électrique augmente alors afin de mettre en mouvement l'étrier 4. La phase qui suit ce deuxième pic, dans laquelle la force de serrage reste constante, correspond à la phase pendant laquelle l'étrier 4 coulisse par rapport à la chape 5 de manière à rapprocher la plaquette 6 de frein externe du disque 7. Enfin, la garniture 10 de la plaquette 6 de frein externe atteint le disque 7 de sorte que les deux plaquettes 6 de frein interne et externe enserrent le disque 7 pour réaliser le freinage. Lorsque les deux plaquettes 6 de frein enserrent le disque 7, on observe une augmentation importante de la force de serrage de manière proportionnelle au déplacement de l'organe 9 de serrage. En début de freinage, on remarque toutefois une différence de profil de courbe en fonction de l'état d'usure des plaquettes 6 de frein. En effet, lorsque les plaquettes 6 de frein sont neuves ou presque neuves (courbe 11), l'épaisseur de leurs garnitures 10 leur permet d'absorber une partie de la force de serrage en étant comprimées en début de freinage de sorte que la courbe forme un arc de cercle (représenté en trait discontinu sur la figure 4) plus ou moins marqué en fonction de l'usure. Une fois que les garnitures 10 des plaquettes 6 de frein ont été comprimées, la force de serrage devient proportionnelle à la position de l'organe de serrage. Lorsque les plaquettes 6 de frein sont usées (courbe 12), l'épaisseur de leurs garnitures 10 ne leur permet pas d'absorber par compression une partie de la force de serrage en début de freinage. On observe notamment que la partie en arc de cercle en trait discontinu n'est plus présente. Ainsi, l'augmentation de la force de serrage est proportionnelle à la position de l'organe 9 de serrage dès le début du freinage.

On décrit ci-après un procédé de détermination d'un état d'usure de la garniture de la plaquette 6 de frein interne du frein 2 à disque pour véhicule. Selon ce procédé :
a) On détermine une longueur de course d1, d2, d3 de l'organe 9 de serrage depuis la position de référence 14 jusqu'à la position de contact 15, 15'. De manière préférée, préalablement à l'étape a), on a commandé un déplacement de l'organe 9 de serrage en position de référence 14 dans laquelle l'organe 9 de serrage est en butée contre un corps d'étrier 4 afin d'améliorer la reproductibilité de la détermination de la longueur de la course d1, d2, d3 de l'organe 9 de serrage et donc la fiabilité du suivi de l'usure de la garniture 10 de la plaquette 6 de frein. Comme indiqué précédemment, afin de déterminer la longueur de la course d1, d2, d3 de l'organe 9 de serrage on détermine avantageusement la force de serrage fournie par le moteur 8 électrique en fonction de la position de l'organe 9 de serrage. On obtient alors un graphique tel que représenté à la figure 4 à partir duquel il est aisé de déterminer la longueur de la course d1, d2, d3 de l'organe 9 de serrage. Cette longueur correspond en effet à l'écart entre l'axe des ordonnées, correspondant à la position de l'organe 9 de serrage en position de référence 14 et le premier pic observé sur la courbe 11, 12. La force de serrage fournie par le moteur 8 électrique est, par exemple, déterminée à partir de l'intensité et de la tension du courant d'alimentation électrique du moteur 8 électrique de manière classique.
   Le déplacement de l'organe 9 de serrage depuis la position de référence 14 jusqu'à la position de contact 15, 15' est réalisé à une vitesse réduite. Pour cela, on commande une réduction de la tension d'alimentation électrique du moteur 8 électrique lors de l'étape a) ou lors de l'étape préalable à l'étape a). Par exemple, la tension d'alimentation électrique est diminuée de manière à passer de 12 V à 7 ou 8 V. Cette diminution de la tension d'alimentation électrique est, par exemple, commandée électroniquement par une unité de commande électronique.
b) On déduit un état d'usure de la garniture 10 de la plaquette 6 de frein en déterminant la différence d4 entre la longueur de la course d1, d2, d3 de l'organe de serrage et une longueur de référence.

Dans le cas présent, la longueur de référence correspond à la longueur de la course d1 de l'organe 9 de serrage depuis la position de référence 14 vers la position de contact 15 lorsque la plaquette 6 de frein est neuve. Ainsi, la longueur de référence correspond à la longueur de la course réelle observée lorsque la plaquette 6 de frein est neuve. De préférence, le procédé comprend en outre, préalablement à l'étape a), une étape de détermination de la longueur de référence. La fiabilité de la détermination de l'état d'usure de la garniture 10 de la plaquette 6 de frein est donc améliorée puisqu'elle prend en compte l'épaisseur réelle de la garniture 10 de la plaquette 6 de frein lorsqu'elle est neuve. Avantageusement, la détermination de la longueur de référence est réalisée à basse vitesse en réduisant la tension d'alimentation électrique du moteur 8 électrique, par exemple entre 7 et 8 V.

Avantageusement, on déduit qu'un remplacement de la plaquette 6 de frein est nécessaire lorsque la différence d4 déterminée à l'étape b) est supérieure à un seuil prédéterminé. Le seuil prédéterminé est par exemple choisi de manière à correspondre à un niveau d'usure proche d'un niveau d'usure susceptible d'affecter l'efficacité de freinage. Ainsi, on déduit qu'un remplacement de la plaquette 6 de frein est nécessaire avant qu'un niveau d'usure de la plaquette 6 de frein susceptible d'affecter l'efficacité du freinage ne soit atteint. On comprend que le seuil prédéterminé varie en fonction de plusieurs paramètres, par exemple en fonction du type et du poids du véhicule 1 sur lequel le frein 2 à disque est monté, ou encore de la nature de la garniture 10 de la plaquette 6 de frein. Dans le cas présent, le seuil prédéterminé est déterminé de manière à correspondre au seuil à partir duquel la garniture 10 de la plaquette 6 de frein interne présente une épaisseur résiduelle inférieure à 2 mm. Il s'agit généralement d'une épaisseur limite en-dessous de laquelle l'efficacité du freinage est affectée. Dans le cas présent, la garniture 10 de la plaquette 6 de frein interne a une épaisseur de 12 mm lorsqu'elle est neuve. Ainsi, le seuil prédéterminé est ici de 10 mm.

Selon un mode de réalisation, le procédé comprend en outre une étape de détermination d'un état d'usure de la garniture 10 de la plaquette 6 de frein en fonction du profil de la courbe 11, 12 représentant l'effort de serrage fourni par le moteur 8 électrique en fonction de la position de l'organe 9 de serrage. Comme indiqué précédemment, l'analyse du profil de la courbe donne des informations sur l'état d'usure des plaquettes 6 de frein. Notamment, le profil de la courbe 11, 12 au début du freinage, lorsque les plaquettes 6 de frein interne et externe enserrent le disque 7, est différent en fonction de l'état d'usure des plaquettes 6 de frein et permet notamment de distinguer facilement lorsque les garnitures 10 des deux plaquettes 6 de frein sont usées car il n'y a alors pas de phase d'absorption d'une partie de la force de serrage au début du freinage.

On décrit ci-après un procédé de gestion de la fiabilité d'un freinage de véhicule selon l'invention. Ce procédé permet de piloter le déclenchement ou non du procédé de détermination d'un état d'usure de la garniture 10 de la plaquette 6 de frein tel que décrit précédemment afin d'optimiser le moment et le nombre de fois où le procédé est mis en œuvre.

Selon ce procédé, on déclenche le procédé de détermination d'un état d'usure de la garniture 10 de la plaquette 6 de frein interne tel que décrit précédemment lorsque le véhicule 1 automobile est à l'arrêt. On s'assure ainsi que le procédé est mis en œuvre dans des conditions sécurisées. Notamment, on évite que le procédé soit mis en œuvre alors que le véhicule 1 automobile est en train de rouler afin d'éviter de provoquer un freinage non désiré.

Avantageusement, on déclenche une mise en œuvre du procédé de détermination d'un état d'usure de la garniture 10 de la plaquette 6 de frein interne tel que décrit précédemment de manière automatique à chaque fois que le véhicule 1 automobile a parcouru une distance prédéterminée depuis la dernière mise en œuvre du procédé ou depuis la première utilisation du véhicule. On comprend que le procédé est mis en œuvre une fois que la distance prédéterminée a été parcourue par le véhicule 1 automobile et uniquement une fois qu'il est à l'arrêt. Comme indiqué précédemment, on optimise ainsi le moment et le nombre de fois où le procédé est mis en œuvre en fonction de l'utilisation réelle du véhicule 1 automobile, et donc du frein 2 à disque. Selon les modes de réalisation, la distance prédéterminée est par exemple comprise entre 5 000 et 15 000 km, et est de préférence égale à 10 km.

Additionnellement ou alternativement, on déclenche une mise en œuvre du procédé de détermination d'un état d'usure de la garniture 10 de la plaquette 6 de frein tel que décrit précédemment de manière automatique à chaque fois qu'un nombre d'actionnement prédéterminé du frein à disque est atteint depuis la dernière mise en œuvre du procédé ou depuis la première utilisation du véhicule. On comprend que le procédé est mis en œuvre une fois que le nombre d'actionnement prédéterminé du frein 2 à disque a été atteint et uniquement une fois qu'il est à l'arrêt. Comme indiqué précédemment, on optimise ainsi le moment et le nombre de fois où le procédé est mis en œuvre en fonction de l'utilisation réelle du frein 2 à disque.

Le véhicule 1 automobile tel que décrit précédemment comprend une unité de commande électronique destinée à commander la mise en œuvre du procédé de détermination d'un état d'usure de la garniture 10 de la plaquette 6 de frein et du procédé de gestion de la fiabilité d'un freinage de véhicule 1 automobile tels que décrits précédemment. Cette unité de commande électronique est notamment apte à déterminer de manière distinctive l'état d'usure de la garniture 10 de la plaquette 6 de frein interne des différents freins 2 à disque montés sur le véhicule 1 automobile. Ainsi, on obtient une information supplémentaire utile pour déterminer sur quel frein 2 à disque il est nécessaire d'intervenir pour remplacer la plaquette 6 de frein. Avantageusement le véhicule comporte des moyens d'affichage pour alerter le conducteur sur l'état d'usure des garnitures 10.

L'invention n'est pas limitée aux modes de réalisation présentés et d'autres modes de réalisation apparaîtront clairement à l'homme du métier.

### Liste de références

1 : véhicule automobile
2 : frein à disque
3 : roue
4 : étrier
5 : chape
6 : plaquette de frein
7 : disque
8 : moteur électrique
9 : organe de serrage
10 : garniture de plaquette de frein
11 : courbe lorsque la plaquette de frein est à l'état neuf
12 : courbe lorsque la plaquette de frein est usée
13 : position d'utilisation
14 : position de référence
15, 15' : position de contact
d1, d2, d3 : course de l'organe de serrage
d4 : différence entre la course de l'organe de serrage et la longueur de référence

## Revendications

1. Procédé de détermination d'un état d'usure d'une garniture (10) d'une plaquette (6) de frein d'un frein (2) à disque pour véhicule (1), le frein à disque comprenant un moteur (8) électrique destiné à fournir une force de serrage à un organe (9) de serrage afin de déplacer la plaquette (6) de frein en direction du disque (7) de manière à ce que la garniture (10) de la plaquette (6) de frein vienne en contact avec le disque (7), procédé dont a) on détermine une longueur de course (d1, d2, d3) de l'organe (9) de serrage depuis une position de référence (14), à l'écart de la plaquette (6) de frein, jusqu'à une position de contact (15,15'), b) on déduit un état d'usure de la garniture (10) de la plaquette (6) de frein en déterminant la différence (d4) entre la longueur de la course (d1, d2, d3) de l'organe (9) de serrage et une longueur de référence,
**caractérisé en ce que** la position de contact (15,15') corresponde à la position de l'organe (9) de serrage au moment où il entre en contact avec la plaquette (6) de frein.

2. Procédé selon la revendication 1, dans lequel on déduit qu'un remplacement de la plaquette (6) de frein est nécessaire lorsque la différence déterminée à l'étape b) est supérieure à un seuil prédéterminé.

3. Procédé selon la revendication 2, dans lequel le seuil prédéterminé est déterminé de manière à correspondre au seuil à partir duquel la garniture (10) de la plaquette (6) de frein présente une épaisseur résiduelle inférieure à 2 mm.

4. Procédé selon la revendication 2 ou 3, dans lequel le seuil prédéterminé est compris entre 8 et 10 mm.

5. Procédé selon l'une quelconque des revendications précédentes, dans lequel au cours de l'étape a), afin de déterminer la longueur de la course (d1, d2, d3) de l'organe de serrage, on détermine la force de serrage fournie par le moteur (8) électrique en fonction de la position de l'organe (9) de serrage.

6. Procédé selon la revendication 5, dans lequel la force de serrage fournie par le moteur (8) électrique est déterminée à partir de l'intensité et la tension du courant d'alimentation électrique du moteur (8) électrique.

7. Procédé selon l'une quelconque des revendications précédentes, dans lequel la longueur de référence correspond à la longueur de la course de l'organe (9) de serrage depuis la position de référence (14) vers la position de contact (15) lorsque la plaquette (6) de frein est neuve, le procédé comprenant de préférence, préalablement à l'étape a), une étape de détermination de la longueur de référence.

8. Procédé selon l'une quelconque des revendications précédentes, dans lequel, préalablement à l'étape a), on commande un déplacement de l'organe (9) de serrage en position de référence (14) dans laquelle l'organe (9) de serrage est en butée contre un corps d'étrier (4) du frein (2) à disque.

9. Procédé selon l'une quelconque des revendications précédentes, dans lequel on commande une réduction de la tension d'alimentation électrique du moteur (8) électrique lors de la mise en oeuvre de l'étape a) et/ou de l'étape préalable à l'étape a) dans laquelle on commande un déplacement de l'organe (9) de serrage en position de référence (14), de préférence la tension d'alimentation électrique du moteur (8) électrique étant diminuée de manière à être comprise entre 7 et 8 V.

10. Procédé selon l'une quelconque des revendications précédentes, comprenant en outre une étape de détermination d'un état d'usure de la garniture (10) de la plaquette (6) de frein en fonction du profil d'une courbe représentant la force de serrage fournie par le moteur (8) électrique en fonction de la position de l'organe (9) de serrage.

11. Procédé de gestion de la fiabilité d'un freinage de véhicule (1), **caractérisé en ce qu'**on déclenche le procédé de détermination d'un état d'usure d'une garniture d'une plaquette (6) de frein d'un frein (2) à disque pour véhicule (1) selon l'une quelconque des revendications précédentes lorsque le véhicule (1) comprenant le frein (2) à disque est à l'arrêt.

12. Procédé selon la revendication précédente, dans lequel on déclenche une mise en œuvre du procédé de détermination d'un état d'usure d'une garniture (10) d'une plaquette (6) de frein d'un frein (2) à disque pour véhicule (1) selon l'une quelconque des revendications 1 à 10 de manière automatique à chaque fois que le véhicule (1) comprenant le frein (2) à disque a parcouru une distance prédéterminée depuis la dernière mise en œuvre du procédé ou depuis la première utilisation du véhicule (1).

13. Procédé selon la revendication 11 ou 12, dans lequel on déclenche une mise en œuvre du procédé de détermination d'un état d'usure d'une garniture (10) d'une plaquette (6) de frein d'un frein (2) à disque pour véhicule (1) selon l'une quelconque des revendications 1 à 10 de manière automatique à chaque fois qu'un nombre d'actionnement prédéterminé du frein (2) à disque est atteint depuis la dernière mise en œuvre du procédé ou depuis la première utilisation du véhicule (1).

14. Véhicule (1) comprenant au moins un frein (2) à disque et une unité de commande électronique, l'unité de commande électronique étant destinée à commander la mise en œuvre du procédé selon l'une quelconque des revendications 1 à 10 et/ou du procédé selon l'une quelconque des revendications 11 à 13.

15. Véhicule (1) selon la revendication précédente, comprenant au moins deux freins (2) à disque, l'unité de commande électronique étant apte à déterminer de manière distinctive l'état d'usure de la garniture (10) de la plaquette (6) de frein de chaque frein (2) à disque.

## Patentansprüche

1. Verfahren zur Ermittlung eines Verschleißzustands eines Belags (10) eines Bremsklotzes (6) einer Scheibenbremse (2) für ein Fahrzeug (1), wobei die Bremsscheibe einen Elektromotor (8) umfasst, der dazu bestimmt ist, einem Klemmglied (9) eine Klemmkraft bereitzustellen, um den Bremsklotz (6) so in Richtung der Scheibe (7) zu bewegen, dass der Belag (10) des Bremsklotzes (6) mit der Scheibe (7) in Kontakt kommt, wobei bei diesem Verfahren
a) eine Hublänge (d1, d2, d3) des Klemmglieds (9) aus einer Referenzposition (14), von dem Bremsklotz (6) beabstandet, in eine Kontaktposition (15, 15') ermittelt wird,
b) ein Verschleißzustand des Belags (10) des Bremsklotzes (6) hergeleitet wird, indem die Differenz (d4) zwischen der Länge des Hubs (d1, d2, d3) des Klemmglieds (9) und einer Referenzlänge ermittelt wird,
**dadurch gekennzeichnet, dass** die Kontaktposition (15, 15') der Position des Klemmglieds (9) zu dem Zeitpunkt entspricht, in dem es mit dem Bremsklotz (6) in Kontakt kommt.

2. Verfahren nach Anspruch 1, bei dem hergeleitet wird, dass ein Austausch des Bremsklotzes (6) notwendig ist, wenn die in Schritt b) ermittelte Differenz größer als ein vorher festgelegter Schwellwert ist.

3. Verfahren nach Anspruch 2, bei dem der vorher festgelegte Schwellwert so ermittelt wird, dass er dem Schwellwert entspricht, ab dem der Belag (10) des Bremsklotzes (6) eine Restdicke von weniger als 2 mm aufweist.

4. Verfahren nach Anspruch 2 oder 3, bei dem der vorher festgelegte Schwellwert zwischen 8 und 10 mm beträgt.

5. Verfahren nach einem der vorhergehenden Ansprüche, bei dem in Schritt a), um die Länge des Hubs (d1, d2, d3) des Klemmglieds zu ermitteln, die von dem Elektromotor (8) bereitgestellte Klemmkraft in Abhängigkeit von der Position des Klemmglieds (9) ermittelt wird.

6. Verfahren nach Anspruch 5, bei dem die von dem Elektromotor (8) bereitgestellte Klemmkraft ausgehend von der Stärke und der Spannung des elektrischen Versorgungsstroms des Elektromotors (8) ermittelt wird.

7. Verfahren nach einem der vorhergehenden Ansprüche, bei dem die Referenzlänge der Länge des Hubs des Klemmglieds (9) aus der Referenzposition (14) in die Kontaktposition (15') entspricht, wenn der Bremsklotz (6) neu ist, wobei das Verfahren bevorzugt, vor Schritt a), einen Schritt der Ermittlung der Referenzlänge umfasst.

8. Verfahren nach einem der vorhergehenden Ansprüche, bei dem, vor Schritt a), eine Bewegung des Klemmglieds (9) in Referenzposition (14) gesteuert wird, in der das Klemmglied (9) gegen einen Sattelkörper (4) der Scheibenbremse (2) in Anschlag ist.

9. Verfahren nach einem der vorhergehenden Ansprüche, bei dem eine Reduzierung der elektrischen Versorgungsspannung des Elektromotors (8) bei der Durchführung von Schritt a) und/oder von dem Schritt vor Schritt a), in dem eine Bewegung des Klemmglieds (9) in Referenzposition (14) gesteuert wird, gesteuert wird, wobei die elektrische Versorgungsspannung des Elektromotors (8) so reduziert wird, dass sie zwischen 7 und 8 V beträgt.

10. Verfahren nach einem der vorhergehenden Ansprüche, ferner umfassend einen Schritt der Ermittlung eines Verschleißzustands des Belags (10) des Bremsklotzes (6) in Abhängigkeit von dem Profil einer Kurve zur Darstellung der von dem Elektromotor (8) bereitgestellten Klemmkraft in Abhängigkeit von der Position des Klemmglieds (9).

11. Verfahren für das Zuverlässigkeitsmanagement einer Bremsung eines Fahrzeugs (1), **dadurch gekennzeichnet, dass** das Verfahren zur Ermittlung eines Verschleißzustands eines Belags eines Bremsklotzes (6) einer Scheibenbremse (2) für ein Fahrzeug (1) nach einem der vorhergehenden Ansprüche ausgelöst wird, wenn das Fahrzeug (1), das die Scheibenbremse (2) umfasst, stillsteht.

12. Verfahren nach dem vorhergehenden Anspruch, bei dem eine Durchführung des Verfahrens zur Ermittlung eines Verschleißzustands eines Belags (10) eines Bremsklotzes (6) einer Scheibenbremse (2) für ein Fahrzeug (1) nach einem der Ansprüche 1 bis 10 jedes Mal dann automatisch ausgelöst wird, wenn das Fahrzeug (1), das die Scheibenbremse (2) umfasst, seit der letzten Durchführung des Verfahrens oder seit der Erstbenutzung des Fahrzeugs (1) eine vorher festgelegte Distanz zurückgelegt hat.

13. Verfahren nach Anspruch 11 oder 12, bei dem eine Durchführung des Verfahrens zur Ermittlung eines Verschleißzustands eines Belags (10) eines Bremsklotzes (6) einer Scheibenbremse (2) für ein Fahrzeug (1) nach einem der Ansprüche 1 bis 10 jedes Mal dann automatisch ausgelöst wird, wenn seit der letzten Durchführung des Verfahrens oder seit der Erstbenutzung des Fahrzeugs (1) eine vorher festgelegte Anzahl an Bestätigungen der Scheibenbremse (2) erreicht ist.

14. Fahrzeug (1), umfassend mindestens eine Scheibenbremse (2) und eine elektronische Steuereinheit, wobei die elektronische Steuereinheit dazu bestimmt ist, die Durchführung des Verfahrens nach einem der Ansprüche 1 bis 10 und/oder des Verfahrens nach einem der Ansprüche 11 bis 13 zu steuern.

15. Fahrzeug (1) nach dem vorhergehenden Anspruch, umfassend mindestens zwei Scheibenbremsen (2), wobei die elektronische Steuereinheit dazu imstande ist, den Verschleißzustand des Belags (10) des Bremsklotzes (6) jeder Scheibenbremse (2) eindeutig zu ermitteln.

## Claims

1. Method for determining a state of wear of a lining (10) of a brake pad (6) of a disc brake (2) for a vehicle (1), the disc brake comprising an electric motor (8) for supplying a clamping force to a clamping member (9) in order to move the brake pad (6) towards the disc (7) so that the lining (10) of the brake pad (6) comes into contact with the disc (7), the method comprising:
a) determining a stroke length (d1, d2, d3) of the clamping member (9) from a reference position (14), away from the brake pad (6), to a contact position (15, 15'),
b) deducing a state of wear of the lining (10) of the brake pad (6) by determining the difference (d4) between the stroke length (d1, d2, d3) of the clamping member (9) and a reference length,
**characterised in that** the contact position corresponds to the position of the clamping member (9) at the moment when it comes into contact with the brake pad (6).

2. Method according to claim 1, in which it is deduced that replacement of the brake pad (6) is necessary when the difference determined in step b) is superior to a predetermined threshold.

3. Method according to claim 2, wherein the predetermined threshold is determined so as to correspond to the threshold at which the lining (10) of the brake pad (6) has a residual thickness of less than 2 mm.

4. Method according to claim 2 or 3, wherein the predetermined threshold is between 8 and 10 mm.

5. Method according to any one of the preceding claims, wherein during step a), in order to determine the stroke length (d1, d2, d3) of the clamping member, the clamping force provided by the electric motor (8) is determined as a function of the position of the clamping member (9).

6. Method according to claim 5, wherein the clamping force provided by the electric motor (8) is determined from the intensity and voltage of the electric supply current of the electric motor (8).

7. Method according to any one of the preceding claims, wherein the reference length corresponds to the length of the stroke of the clamping member (9) from the reference position (14) to the contact position (15) when the brake pad (6) is new, the method preferably comprising, prior to step a), a step of determining the reference length.

8. Method according to any one of the preceding claims, in which, prior to step a), a movement of the clamping member (9) to the reference position (14) in which the clamping member (9) abuts against a caliper body (4) of the disc brake (2) is controlled.

9. Method according to any one of the preceding claims, in which a reduction in the electrical supply voltage to the electric motor (8) is controlled during the implementation of step a) and/or during the step prior to step a) in which a movement of the clamping member (9) to the reference position (14) is controlled, preferably the electrical supply voltage to the electric motor (8) being reduced so that it is comprised between 7 and 8 V.

10. Method according to any one of the preceding claims, further comprising a step of determining a state of wear of the lining (10) of the brake pad (6) as a function of the profile of a curve representing the clamping force provided by the electric motor (8) as a function of the position of the clamping member (9).

11. Method for managing the reliability of a braking of a vehicle (1), **characterised in that** the method for determining the state of wear of a lining of a brake pad (6) of a disc brake (2) for a vehicle (1) according to any one of the preceding claims is triggered when the vehicle (1) comprising the disc brake (2) is stationary.

12. Method according to the preceding claim, wherein an implementation of the method for determining the state of wear of a lining (10) of a brake pad (6) of a disc brake (2) for a vehicle (1) according to any one of claims 1 to 10 is triggered automatically each time the vehicle (1) comprising the disc brake (2) has travelled a predetermined distance since the last implementation of the method or since the first use of the vehicle (1).

13. Method according to claim 11 or 12, wherein an implementation of the method for determining a state of wear of a lining (10) of a brake pad (6) of a disc brake (2) for a vehicle (1) according to any one of claims 1 to 10 is triggered automatically each time a predetermined number of actuations of the disc brake (2) is reached since the last implementation of the method or since the first use of the vehicle (1).

14. Vehicle (1) comprising at least one disc brake (2) and an electronic control unit, the electronic control unit being designed to control the implementation of the method according to any one of claims 1 to 10 and/or the method according to any one of claims 11 to 13.

15. Vehicle (1) according to the previous claim, comprising at least two disc brakes (2), the electronic control unit being capable of determining in a distinctive manner the state of wear of the lining (10) of the brake pad (6) of each disc brake (2).
